# EUROPÄISCHE PATENTSCHRIFT

(11) **EP 1 125 805 B1**
(45) Veröffentlichungstag und Bekanntmachung des Hinweises auf die Patenterteilung: **25.10.2006**
(21) Anmeldenummer: 01102761.2
(22) Anmeldetag: 08.02.2001
(51) Int. Cl.: B60S 1/04

(54) **Befestigungsanordnung für eine Scheibenwischeranlage einer Fahrzeugkarosserie**
Mounting device for a windscreen wiper apparatus on a vehicle body
Dispositif de fixation d'un système d'essuie-glace sur une carosserie de véhicule

(30) Priorität: 17.02.2000 DE 10007056
(43) Veröffentlichungstag der Anmeldung: 22.08.2001
(73) Patentinhaber: Volkswagen Aktiengesellschaft, 38436 Wolfsburg (DE)
(72) Erfinder: Ostrowski, Wolfgang, 38446 Wolfsburg (DE)

(56) Entgegenhaltungen:
- EP-A- 0 359 733
- DE-A- 4 328 652
- DE-A- 4 333 484
- DE-A- 19 525 553
- FR-A- 2 770 880
- GB-A- 2 258 145
- NL-A- 298 280
- US-A- 3 793 671
- US-A- 4 522 378
- US-A- 5 706 547
- US-A- 5 820 286
- PATENT ABSTRACTS OF JAPAN vol. 009, no. 168 (M-396), 13. Juli 1985 (1985-07-13) -& JP 60 042121 A (NISSAN JIDOSHA KK), 6. März 1985 (1985-03-06)

## Beschreibung

Die Erfindung betrifft eine Befestigungsanordnung für eine Scheibenwischeranlage an einer Fahrzeugkarosserie, insbesondere für eine Scheibenwischeranlage mit einem Gestängeantrieb.

Scheibenwischeranlagen mit einem Gestängeantrieb weisen vorteilhafter- und heute auch üblicherweise einen am Fahrzeugkörper anordbaren Träger mit einem vormontierten Wischermotor und in der Regel zwei im Abstand angeordneten Lagerböcken auf, in denen jeweils eine Antriebswelle für einen Wischerarm mit einem drehfesten Schwenkhebel angeordnet ist und über ein Gestänge mit dem Wischermotor verbunden ist (DE-OS 2 052 139). Der Wischermotor ist bevorzugt zwischen den Lagerböcken angeordnet, kann aber auch im Bereich eines der Lagerböcke angeordnet sein. Eine derartig vormontierte Scheibenwischeranlage ist/ wird als komplette Baueinheit an der Fahrzeugkarosserie befestigt. Dazu wird der Träger bevorzugt an wenigstens zwei auseinanderliegenden Stellen, entweder an den Lagerböcken oder an am Träger angeordneten Befestigungselementen auf der dem Wischermotor abgewandten Seite der Lagerböcke, und an einer dritten Stelle mit der Fahrzeugkarosserie verbunden, derart, daß die durch die Wischerbewegung hervorgerufenen Reaktionskräfte aufgenommen werden können und eine Schwenkbewegung des Trägers um eine durch die beiden Lagerböcke bestimmte Achse unterbleibt (Drehmomentenabstützung). Werden die Lagerböcke zugleich als Festlegungspunkte für den Träger verwendet, sind sie mit Befestigungselementen zu versehen, die auch die Anordnung von akustischen Entkopplungselementen gestatten, über die der Träger an der Fahrzeugkarosserie festgelegt wird.

Aus der EP-A-0 359 733 ist eine Befestigungsanordnung für eine Scheibenwischeranlage bekannt, die einen langgestreckten Träger mit einem vormontierten Wischermotor und einem mit diesem und wenigstens der Antriebswelle für einen Wischerarm verbundenen Gestänge aufweist, wobei der Träger an wenigstens drei Befestigungsstellen mit der Fahrzeugkarosserie verbunden ist. Von diesen Befestigungsstellen ist auf jeder Seite des Wischermotors eine gegeben, die dabei einen geringeren Abstand zu diesem als das Lager für die Antriebswelle hat, und die dritte Befestigungsstelle ist im Abstand von der Verbindungslinie zwischen diesen beiden Befestigungsstellen vorgesehen. Die Befestigung des Trägers an den drei Befestigungsstellen erfolgt durch Schraubverbindungen.

Gegenstand der NL-A-298280 ist eine Befestigungsanordnung für eine Scheibenwischeranlage, die einen langgestreckten Träger mit einem vormontierten Wischermotor und einem mit diesem und wenigstens der Antriebswelle für einen Wischerarm verbundenen Gestänge aufweist, wobei der Träger an wenigstens drei Befestigungsstellen mit der Fahrzeugkarosserie verbunden ist. Von diesen ist eine erste Befestigungsstelle auf einer Seite und eine zweite Befestigungsstelle auf der anderen Seite des Wischermotors am Träger angeordnet, die einen geringeren Abstand zum Wischermotor als ein Lager für die Antriebswelle aufweisen. Die dritte Befestigungsstelle ist im Abstand von der Verbindungslinie zwischen der ersten und der zweiten Befestigungsstelle vorgesehen und als Steckverbindungselement einer schwingungs- und geräuschgedämpften Steckverbindung für ein an der Fahrzeugkarosserie fest angeordnetes Gegenstück ausgebildet, wobei die Steckrichtung im wesentlichen quer zur Rotationsachse einer das Antriebsgestänge betätigenden Antriebskurbel gegeben ist.

Es ist nun Aufgabe der Erfindung, eine Befestigungsanordnung für eine Scheibenwischeranlage nach dem Oberbegriff des Anspruchs 1 zu schaffen, die zu einer kompakteren und aufwandsreduzierten vormontierbaren Baueinheit führt.
Diese Aufgabe wird bei einer Befestigungsanordnung nach dem Oberbegriff des Anspruchs 1 durch dessen kennzeichnende Merkmale gelöst. Vorteilhafte Ausgestaltungen sind in den Unteransprüchen beschrieben.

Die Erfindung besteht darin, dass bei einem an sich bekannten langgestreckten. Träger mit einem vormontierten Wischermotor und einem mit diesem und wenigstens der Antriebswelle für einen Wischerarm verbundenen Gestänge als Baueinheit einer Scheibenwischeranlage, die an wenigstens drei Befestigungsstellen mit der Fahrzeugkarosserie verbunden ist, von denen eine erste Befestigungsstelle auf einer Seite des Wischermotors und eine zweite Befestigungsstelle auf dessen anderer Seite vorgesehen ist, die einen geringeren Abstand zum Wischermotor als das jeweilige Lager für die Antriebswelle aufweisen, und die als Steckverbindungselement einer schwingung- und geräuschgedämpften Steckverbindung ausgebildete dritte Befestigungsstelle im Abstand von der Verbindungslinie zwischen den beiden ersten Befestigungsstellen vorgesehen ist, die erste und die zweite Befestigungsstelle auf der oder im Wesentlichen auf der Verbindungslinie zwischen den Lagern für die Antriebswelle ausgebildet ist.

Die Befestigungsrichtung an der ersten und der zweiten Befestigungsstelle entspricht dabei der Anordnungsrichtung der Rotationsachse einer das Antriebsgestänge betätigenden Antriebskurbel, wohingegen die Steckrichtung an der dritten Befestigungsstelle, die in bekannter Weise der zuverlässigen Aufnahme der durch die Scheibenwischerbewegung hervorgerufenen Reaktionskräfte des mit den vorstehend genannten Antriebselementen bestückten Trägers und der Verhinderung einer Schwenkbewegung des Trägers um eine durch die beiden ersten Befestigungsstellen bestimmte Achse dient, im Wesentlichen - auch in bekannter Weise - quer zur Rotationsachse bzw. im Wesentlichen parallel zur Bewegungsebene des Aritriebsgestänges gegeben ist. Durch diese Befestigungsanordnung ist zudem die Übertragung von Schwingungen und Erschütterungen sowie Geräuschen reduziert.

Die Montage des bestückten Trägers ist sehr erleichtert, da der Träger mit seinem Steckverbindungselement auf einfache Weise von vorn an dem an der Fahrzeugkarosserie ausgebildeten oder angeordneten Steckverbindungselement fixiert wird und anschließend, ebenfalls auf einfache Weise, an den beiden anderen leicht zugänglichen Befestigungsstellen fixiert, insbesondere nur verschraubt zu werden bracht. Der zur Herstellung der Steckverbindung erforderliche Montageraum ist vergleichsweise klein, so dass die Steckverbindung auch an eine Stelle gelegt werden kann, wo eine Schraubverbindung, beispielsweise aus Platzgründen, nicht hergestellt werden könnte.

Das Steckverbindungselement ist vorteilhaft an einer am Träger angeordneten Konsole ausgebildet oder angeordnet und ist eine Steckbuchse aus einem elastischen Dämpfungsmaterial, insbesondere Gummi, für einen an der Fahrzeugkarosserie angeordneten Steckbolzen, da sich eine derartige Steckbuchse an der Fahrzeugkarosserie nur mit größeren Aufwand als an der Konsole anordnen lässt. Um die Steckrichtung einhalten zu können, muß der die Steckbuchse tragende Bereich der Konsole abgewinkelt sein. Zur Erleichterung des Steckvorganges ist die Steckbuchse karosserieseieitg mit einer konischen Einführöffnung versehen.

An den Befestigungsstellen können Aufnahmen für schwingungs- und geräuschdämpfende Befestigungselemente angeordnet sein, über die der Träger mit der Fahrzeugkarosserie fest verbindbar ist. Alternativ dazu können diese Befestigungselemente auch an der Fahrzeugkarosserie angeordnet sein. Durch diese wird die Übertragung von Schwingungen und Erschütterungen sowie Geräuschen minimiert.

Die Aufnahmen können kreisrunde Löcher sein, an deren umgebenden Rand die Befestigungselemente anordbar sind. Zur Erleichterung der Anordnung derselben können die Löcher mit einer Öffnung zum Rand des Trägers versehen sein, über die das jeweilige elastische Befestigungselement in das Loch drückbar ist.

Vorteilhaft stehen die elastischen Befestigungselemente jeweils an einem fest mit der Fahrzeugkarosserie verbundenen Halterungsbock in lösbarem Eingriff. Bei einer im wesentlichen axialen Stoßbelastung, bezogen auf die Aufnahme, ist das jeweilige Befestigungselement über einen am Halterungsbock ausgebildeten verjüngten oder erweiterten Abschnitt außer Eingriff bringbar. Dabei dient der Abschnitt sowohl einer definierten Fixierung der beiden Halterungsglieder - Befestigungselement und Halterungsbock - aneinander als auch einem Lösen derselben bei axialer Stoßbelastung. Die zum Lösen erforderliche Kraft ist durch die geometrische Gestaltung der Befestigungsanordnung und durch den eingesetzten elastischen Werkstoff vorbestimmbar. Die Befestigungsanordnung ermöglicht es, dass die mit dieser gehalterte Scheibenwischeranlage bei einem Unfall mit einer beteiligten Person unter Energieaufnahme bis auf die Fahrzeugkarosserie gedrückt und so daß Verletzungsrisiko für die betreffende Person weitestmöglich reduziert wird.

Die Erfindung wird nachstehend anhand von Ausführungsbeispielen erläutert. In den zugehörigen Zeichnungen zeigen, im wesentlichen schematisch:
- Fig. 1:: eine Scheibenwischeranlage mit einer Antriebskurbel für das Gestänge,
- Fig. 2:: die Scheibenwischeranlage in der Draufsicht und
- Fig. 3:: eine Scheibenwischeranlage mit einem Reversiermotor.

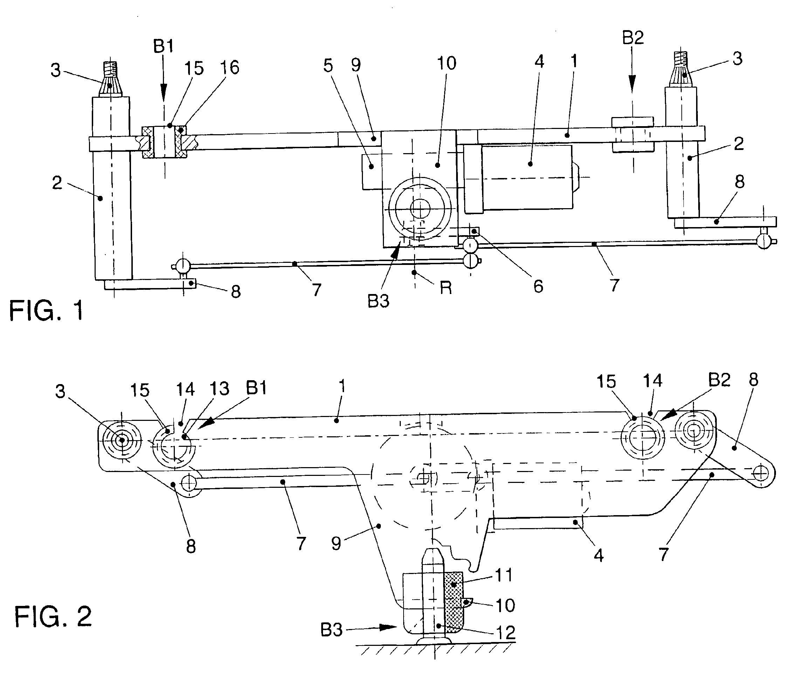

In Fig. 1 ist ein Träger 1 mit zwei Lagerböcken 2 für jeweils eine Antriebswelle 3 für einen Wischerarm und mit einem vormontierten Wischermotor 4 mit einem Getriebe 5, einer mit dieser verbundenen Antriebskurbel 6 und einem Antriebsgestänge 7 dargestellt, wobei dieses an der Antriebskurbel 6 und jeweils an einem an der jeweiligen Antriebswelle 3 drehfest angeordneten Schwenkhebel 8 angelenkt ist. Im Bereich des Getriebs 5 ist am Träger 1 eine Konsole 9 ausgebildet, die das Getriebe 5 überdeckt und eine rechtwinklige Abwinklung 10 aufweist. Diese Baueinheit weist drei Befestigungspunkte B1 bis B3 auf.

Zwei Befestigungspunkte B1 und B2 befinden sich beidseits des Wischermotors 4 im Bereich zwischen diesem und dem jeweiligen Lagerbock 2, so dass diese Befestigungsstellen B1 und B2 einen geringen Abstand zum Wischermotor 4 als die Lagerböcke für die Antriebswellen 3 aufweisen, und die dritte Befestigungsstelle B3 ist an der Abwinklung 10 der Konsole 9, also im Bereich zwischen den ersten beiden Befestigungsstellen B1 und B2 und im Abstand von der diese verbindenden Geraden, als Steckverbindung ausgebildet, wobei die Steckrichtung quer zur Rotationsachse R der Antriebskurbel gegeben ist. Das Steckverbindungselement ist eine aus Gummi bestehende Steckbuchse 11 für einen an der Fahrzeugkarosserie fest angeordneten Steckbolzen 12.

An den am Träger 1 gegebenen Befestigungstellen B1 und B2 sind kreisrunde Löcher 13 mit einer Öffnung 14 zum Rand des Trägers 1 angeordnet. In diesen sind schwingungs- und geräuschdämpfende Befestigungselemente 15 aus Gummi mit beidseits am Träger aufliegenden Flanschen 16 angeordnet. Der Außendurchmesser der Befestigungselemente 15 im Bereich zwischen den Flanschen 16 entspricht dem der Löcher 13, ist jedoch größer als die Breite der Öffnung 14, so daß ein fester Sitz am Träger 1 sichergestellt ist. Über diese Befestigungselemente 15 wird der Träger 1 nach Herstellung der Steckverbindung (B3) mit dem Karosserieblech verschraubt.

Fig. 2 zeigt die Befestigungsanordnung in der Draufsicht, in der insbesondere die Anordnung und Gestaltung der Befestigungsstellen B1 und B2 mit der Anordnung der Befestigungselemente 15 und auch die Gestaltung der Steckbuchse 11 zu erkennen sind. Die Steckbuchse 11 ist ein dickwandiger zylindrischer Gummikörper, der in der Mitte seiner Mantelfläche eine umlaufende Nut zur Anordnung in einer kreisrunden Ausnehmung an der Abwinklung 10 der Konsole 9 aufweist. Karosseriewandseitig weist die Steckbuchse 11 eine konische Einführöffnung für den Steckbolzen 12 auf, wobei die zylinderförmige Stecköffnung für diesen einen geringeren Durchmesser als der Steckbolzen 11 hat, um einen festen elastischen Sitz der Steckverbindung sicherzustellen.

Die dargestellte Baueinheit wird an der Fahrzeugkarosserie montiert, indem zunächst die Steckbuchse 11 auf den Steckbolzen 12 gedrückt wird, wobei unter radialer Kompression des Gummikörpers eine elastische Verformung geschaffen wird. Anschließend werden die beiden Lagerböcke 2 in Öffnungen im Karosserieblech (nicht dargestellt) positioniert und der Träger 1 an den Befestigungsstelen B1 und B2 mit einer Schraube-Mutter-Verbindung am Karosserieblech festgelegt.

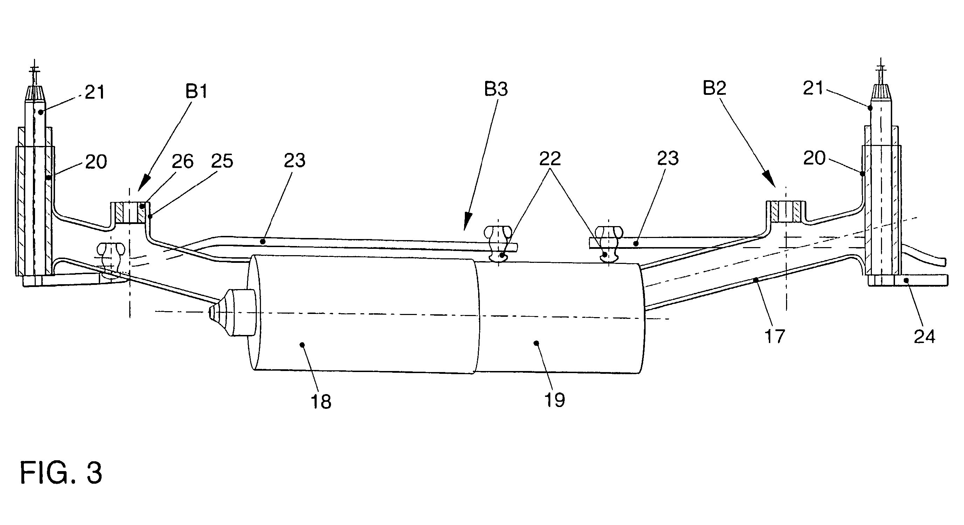

In Fig. 3 ist eine Baueinheit mit einem Träger, der ein durch eine Innenhochdruckumformung hergestellter Rohrrahmen 17 ist, einem Reversiermotor 18 mit einer Verschiebehülse 19, zwei Lagerböcken 20 - jeweils am Ende des Rohrrahmens 17 für eine Antriebswelle 21 für einen Wischerarm ausgebildet -, an der Verschiebehülse 19 angeordneten Lagerzapfen 22, die über eine angelenkte Antriebsstange 23 mit einem Schwenkhebel 24 mit der jeweiligen Antriebswelle 21 verbunden sind, dargestellt. Am Rohrrahmen 17 sind im Bereich zwischen dem Reversiermotor 18 und den Lagerböcken 20 Aufnahmehülsen 25 für Gewindebuchsen 26 (Befestigungsstellen B1 und B2) angeformt. Mit diesen und an einer dritten, durch den Reversiermotor verdeckten Befestigungsstelle B3 wird die Baueinheit am Karosserieblech über an diesem angeordnete schwingungs- und geräuschdämpfende Entkopplungselemente festgelegt.

### BEZUGSZEICHENLISTE

- 1: Träger
- 2: Lagerbock
- 3: Antriebswelle
- 4: Wischermotor
- 5: Getriebe
- 6: Antriebskurbel
- 7: Antriebsgestänge
- 8: Schwenkhebel
- 9: Konsole
- 10: Abwinklung
- 11: Steckbuchse
- 12: Steckbolzen
- 13: Loch
- 14: Öffnung
- 15: Befestigungselement
- 16: Flansch
- 17: Rohrrahmen
- 18: Reversiermotor
- 19: Verschiebehülse
- 20: Lagerbock
- 21: Antriebswelle
- 22: Lagerzapfen
- 23: Antriebsstange
- 24: Schwenkhebel
- 25: Aufnahmehülse
- 26: Gewindebuchse
- B1: Befestigungsstelle
- B2: Befestigungsstelle
- B3: Befestigungsstelle
- R: Rotationsachse

## Patentansprüche

1. Befestigungsanordnung für eine Scheibenwischerantage an einer Fahrzeugkarosserie, die einen langgestreckten Träger (1, 17) mit einem vormontierten Wischermotor (4, 18) und einem mit diesem und wenigstens der Antriebswelle (3, 21) für einen Wischerarm verbundenen Antriebsgestänge (7, 23) aufweist, wobei der Träger (1, 17) an wenigstens drei Befestigungsstellen (B1, B2, B3) mit der Fahrzeugkarosserie verbunden ist, von denen eine erste Befestigungsstelle (B1) auf der einen und eine zweite Befestigungsstelle (B2) auf der anderen Seite des Wischermotors (4, 18) am Träger (1, 17) gegeben sind, die einen geringeren Abstand zum Wischermotor (4, 18) als das jeweilige Lager (2, 20) für die Antriebswelle (3, 21) aufweisen und eine dritte Befestigungsstelle (83) im Abstand von der Verbindungslinie zwischen der ersten und der zweiten Befestigungsstelle (B1, B2) vorgesehen ist, die als Steckverbindungselement (11) einer schwingungs- und geräuschgedämpften Steckverbindung für ein an der Fahrzeugkarosserie fest angeordnetes Gegenstück ausgebildet ist, wobei die Steckrichtung im Wesentlichen quer zur Rotationsachse (R) einer das Antriebsgestänge (7) betätigenden Antriebskurbel (6) gegeben ist, **dadurch gekennzeichnet, dass** die erste und die zweite Befestigungsstelle (B1, B2) auf der oder im Wesentlichen auf der Verbindungslinie zwischen den Lagern (2, 20) für die Antriebswellen (3, 21) ausgebildet sind, und dass die Befestigungsrichtung an der ersten und der zweiten Befestigungsstelle (B1, B2) der Anordnungsrichtung der Rotationsachse (R) entspricht.

2. Befestigungsanordnung nach Anspruch 1, **dadurch gekennzeichnet, dass** an der ersten und der zweiten Befestigungsstelle (B1, B2) Aufnahmen für schwingungs- und geräuschdämpfende Befestigungselemente (15) angeordnet sind, über die der Träger (1) mit der Fahrzeugkarosserie fest verbindbar ist.

3. Befestigungsanordnung nach Anspruch 2, **dadurch gekennzeichnet, dass** die Aufnahmen kreisrunde Löcher (13) mit einer Öffnung (14) zum Rand des Trägers (1) sind.

4. Befestigungsanordnung nach Anspruch 2, **dadurch gekennzeichnet, dass** die Befestigungselemente (15) jeweils an einem fest mit der Fahrzeugkarosserie verbundenen Halterungsbock in Eingriff stehen und bei einer Stoßbelastung von diesem lösbar sind.

5. Befestigungsanordnung nach Anspruch 3, **dadurch gekennzeichnet, dass** das Steckverbindungselement (11) an einer am Träger (1) angeordneten Konsole (9) ausgebildet ist.

6. Befestigungsanordnung nach Anspruch 3, **dadurch gekennzeichnet, dass** der die Steckbuchse (11) tragende Teil der Konsole (9) eine Abwinklung (10) ist.

7. Befestigungsanordnung nach Anspruch 5, **dadurch gekennzeichnet, dass** die Steckbuchse (11) steckbolzenseitig eine konische Einführöffnung aufweist.

## Claims

1. Mounting arrangement for a windscreen wiper apparatus on a vehicle body, which arrangement has an elongate support (1, 17) with a pre-fitted wiper motor (4, 18) and a driving linkage (7, 23) which is connected to the said wiper motor and at least to the drive shaft (3, 21) for a wiper arm, the support (1, 17) being connected to the vehicle body at at least three mounting points (B1, B2, B3) of which a first mounting point (B1) is provided on the one side of the wiper motor (4, 18) on the support (1, 17) and a second mounting point (B2) is provided on the other side thereof, which mounting points are at a smaller distance from the wiper motor (4, 18) than the respective bearing (2, 20) for the drive shaft (3, 21), and a third mounting point (B3) is provided at a distance from the connecting line between the first and the second mounting point (B1, B2), which third mounting point is designed as a plug-in connecting element (11) of a vibration- and noise-damped plug-in connection for a counterpart arranged fixedly on the vehicle body, the plug-in direction being provided essentially transversely to the axis of rotation (R) of a driving crank (6) actuating the driving linkage (7), **characterized in that** the first and the second mounting points (B1, B2) are formed on the, or essentially on the, connecting line between the bearings (2, 20) for the drive shafts (3, 21), and **in that** the mounting direction at the first and the second mounting point (B1, B2) corresponds to the direction in which the axis of rotation (R) is arranged.

2. Mounting arrangement according to Claim 1, **characterized in that** receptacles for vibration- and noise-damping mounting elements (15), via which the support (1) can be connected fixedly to the vehicle body, are arranged on the first and the second mounting point (B1, B2).

3. Mounting arrangement according to Claim 2, **characterized in that** the receptacles are circular holes (13) with an opening (14) to the edge of the support (1).

4. Mounting arrangement according to Claim 2, **characterized in that** the mounting elements (15) are in each case in engagement at a securing support connected fixedly to the vehicle body and can be released from the said securing support when subjected to an impact loading.

5. Mounting arrangement according to Claim 3, **characterized in that** the plug-in connecting element (11) is formed on a bracket (9) arranged on the support (1).

6. Mounting arrangement according to Claim 3, **characterized in that that** part of the bracket (9) which supports the plug-in bushing (11) is an angled section (10).

7. Mounting arrangement according to Claim 5, **characterized in that** the plug-in bushing (11) has a conical introductory opening on the plug-in bolt side.

## Revendications

1. Dispositif de fixation pour un système d'essuie-glace sur une carrosserie de véhicule, qui présente un support allongé (1, 17) avec un moteur d'essuie-glace prémonté (4, 18) et une tringle d'entraînement (7, 23) connectée à celui-ci et au moins à l'arbre d'entraînement (3, 21) pour un bras d'essuie-glace, le support (1, 17) étant connecté en au moins trois points de fixation (B1, B2, B3) à la carrosserie du véhicule, un premier point de fixation (B1) étant prévu d'un côté du moteur d'essuie-glace (4, 18) sur le support (1, 17) et un deuxième point de fixation (B2) étant prévu de l'autre côté, ces deux points étant à plus faible distance du moteur d'essuie-glace (4, 18) que le palier respectif (2, 20) pour l'arbre d'entraînement (3, 21), et un troisième point de fixation (B3) étant prévu à distance de la ligne de connexion entre le premier et le deuxième point de fixation (B1, B2), et étant réalisé en tant qu'élément de raccord à fiche (11) d'une connexion enfichable à amortissement des vibrations et des bruits pour une pièce conjuguée disposée fixement sur la carrosserie du véhicule, la direction d'enfichage étant essentiellement transversale à l'axe de rotation (R) d'une manivelle d'entraînement (6) actionnant la tringle d'entraînement (7), **caractérisé en ce que** le premier et le deuxième point de fixation (B1, B2) sont réalisés sur la ligne de connexion ou sensiblement sur la ligne de connexion entre les paliers (2, 20) pour les arbres d'entraînement (3, 21), et **en ce que** la direction de fixation sur le premier et le deuxième point de fixation (B1, B2) correspond à la direction d'orientation de l'axe de rotation (R).

2. Dispositif de fixation selon la revendication 1, **caractérisé en ce que** des logements pour des éléments de fixation (15) amortissant les vibrations et les bruits sont prévus sur le premier et le deuxième point de fixation (B1, B2), et permettent de connecter fixement le support (1) à la carrosserie du véhicule.

3. Dispositif de fixation selon la revendication 2, **caractérisé en ce que** les logements sont des trous ronds circulaires (13) avec une ouverture (14) vers le bord du support (1).

4. Dispositif de fixation selon la revendication 2, **caractérisé en ce que** les éléments de fixation (15) sont en prise à chaque fois avec un bloc de fixation connecté fixement à la carrosserie du véhicule et peuvent être détachés de celui-ci en cas de contrainte de choc.

5. Dispositif de fixation selon la revendication 3, **caractérisé en ce que** l'élément de connexion par enfichage (11) est réalisé sur une console (9) prévue sur le support (1).

6. Dispositif de fixation selon la revendication 3, **caractérisé en ce que** la partie de la console (9) portant la douille d'enfichage (11) est une pièce repliée (10).

7. Dispositif de fixation selon la revendication 5, **caractérisé en ce que** la douille d'enfichage (11) présente du côté du boulon d'enfichage une ouverture d'insertion conique.
